# EUROPÄISCHE PATENTSCHRIFT

(11) **EP 4 303 436 B1**
(45) Veröffentlichungstag und Bekanntmachung des Hinweises auf die Patenterteilung: **28.01.2026**
(21) Anmeldenummer: 22182753.8
(22) Anmeldetag: 04.07.2022
(51) Int. Cl.: F03D 80/40

(54) **WINDENERGIEANLAGEN-ROTORBLATT UND WINDENERGIEANLAGE**
WIND TURBINE BLADE ROTOR BLADE AND WIND TURBINE
PALE DE ROTOR POUR ÉOLIENNES ET ÉOLIENNE

(43) Veröffentlichungstag der Anmeldung: 10.01.2024
(73) Patentinhaber: Wobben Properties GmbH, 26607 Aurich (DE)
(72) Erfinder: Mahmoud, Muhanad, 26605 Aurich (DE); Stemberg, Jochen, 26607 Aurich (DE); Daboul, Hussam, 26624 Südbrookmerland (DE)
(74) Vertreter: Eisenführ Speiser

(56) Entgegenhaltungen:
- EP-A1- 3 048 296
- EP-B1- 3 329 120
- CN-A- 113 819 014
- US-A- 4 929 088
- US-A1- 2016 296 885

## Beschreibung

Die vorliegende Erfindung betrifft ein Windenergieanlagen-Rotorblatt und eine Windener-gieanlage.

Da Rotorblätter einer Windenergieanlage ungeschützt allen Witterungsbedingungen ausgesetzt sind, kann es bei bestimmten Temperaturen zu einer Vereisung der Rotorblätter kommen. Um dies zu verhindern, kann eine Rotorblattheizung verwendet werden. Hierbei kann entweder eine Heizung außen am Rotorblatt vorgesehen werden oder erwärmte Luft kann innerhalb des Rotorblattes bereitgestellt werden. Dies kann beispielsweise mittels eines Heizregisters erfolgen, das warme Luft erzeugt, welche dann in das Innere des Ro-torblattes geblasen wird.

WO 2017/021350 A1 zeigt ein Windenergieanlagen-Rotorblatt mit einem Rotorblattwurzel-bereich und einem Rotorblattspitzenbereich sowie einer Rotorblattheizung. Ferner ist mindestens ein Steg entlang einer Längsachse des Rotorblattes vorgesehen. An dem Steg kann eine Umlenkeinheit in Form eines Stegtropfens vorgesehen sein, um eine Verwirbe-lung der Luft beim Umlenken zu reduzieren.

WO 2018/211055 zeigt ein Windenergieanlagen-Rotorblatt mit einer Rotorblattheizung. Das Rotorblatt weist einen Steg und eine Umlenkeinheit im Bereich der Rotorblattspitze zum Umlenken von erwärmter Luft auf.

Während des Patenterteilungsverfahrens wurden u. a. folgende Dokumente betrachtet: EP 3 048 296 A1, EP 3 329 120 B1, US 2016/296885 A1, CN 113 819 014 A und US 4 929 088 A.

Es ist eine Aufgabe der vorliegenden Erfindung, ein Windenergieanlagen-Rotorblatt vorzusehen, welches eine verbesserte Beheizung des Rotorblattes ermöglicht.

Diese Aufgabe wird durch ein Windenergieanlagen-Rotorblatt nach Anspruch 1 gelöst.

Somit wird ein Windenergieanlagen-Rotorblatt mit einer Rotorblattwurzel, einer Rotorblattspitze, einer Druckseite, einer Saugseite, einer Vorderkante und einer Hinterkante vorgesehen. Das Rotorblatt weist eine Längsrichtung auf. Mittels einer Rotorblattheizung wird warme Luft erzeugt, welche dann in das Innere des Rotorblattes geblasen wird. In der Luftführung innerhalb des Rotorblattes ist mindestens ein statischer oder passiver aerodynamischer Mischer vorgesehen. Der Mischer bewirkt eine Verwirbelung der durch ihn durchströmenden Luft und/oder eine zumindest lokale Erhöhung der Strömungsgeschwindigkeit. Durch den Mischer wird erreicht, dass sich die Luftmassen mit unterschiedlichen Temperaturen (warme Luft in der Mitte der Luftströmung und kältere Luft zur Rotorblattaußenseite) besser vermischen.

Gemäß einem Aspekt der Erfindung kann der statische aerodynamische Mischer als aerodynamischer Mixer, als Statorschaufel oder als Leitblech ausgestaltet sein. Alternativ oder zusätzlich dazu kann der Mischer als eine schneckenartige Profilierung (z. B. können spiralförmige Rillen in eine Rohrwandung vorgesehen sein) an den Innenwandungen der Luftführung ausgestaltet sein.

Durch die aerodynamisch wirksamen Elemente des Mischers wird eine gleichmäßige Luftströmung zumindest teilweise in eine mit Drall behaftete Luftströmung umgewandelt.

Gemäß einem Aspekt der Erfindung ist mindestens ein Steg zwischen der Druckseite und der Saugseite entlang der Längsrichtung des Rotorblattes vorgesehen. Die von der Rotorblattheizung erwärmte Luft kann entlang des Steges in Richtung der Rotorblattspitze geblasen werden, wo sie umgelenkt wird, so dass die erwärmte Luft auf der anderen Seite des Steges zurück von dem Rotorblattspitzenbereich zu dem Rotorblattwurzelbereich strömen kann. Ein aerodynamischer Mischer kann entlang eines Steges vorgesehen sein.

Optional weist der statische oder passive aerodynamische Mischer keine aktiven Elemente auf, angetrieben werden müssten, um eine Vermischung der durchströmenden Luft zu bewirken.

Gemäß einem Aspekt kann der aerodynamische Mischer an seiner einen Seite an die Ro-torblattinnenwandung oder an einen Steg gekoppelt sein.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische abschnittsweise Darstellung des Rotorblattes der Windenergieanlage von Fig. 1 gemäß einer erfindungsgemäßen Ausführungsform,
- Fig. 3: zeigt eine schematische Schnittansicht eines Rotorblattes einer Wind-energieanlage von Fig. 1 gemäß einer erfindungsgemäßen Ausfüh-rungsform,
- Fig. 4A: zeigt eine schematische Schnittansicht einer Luftführung bei einem Ro-torblatt gemäß dem Stand der Technik,
- Fig. 4B: zeigt eine schematische Schnittansicht einer Luftführung bei einem Ro-torblatt gemäß der Erfindung,
- Fig. 5: zeigt eine schematische Darstellung einer Luftströmung in einer Luftführung bei einem Rotorblatt gemäß der Erfindung,
- Fig. 6: zeigt eine schematische Darstellung eines Mischers gemäß einem Ausführungsbeispiel der Erfindung,
- Fig. 7: zeigt eine schematische Darstellung eines Mischers gemäß einem zweiten Ausführungsbeispiel,
- Fig. 8: zeigt eine schematische Darstellung eines Mischers für ein Rotorblatt gemäß einem dritten Ausführungsbeispiel,
- Fig. 9: zeigt eine schematische Darstellung eines Mischers für ein Rotorblatt gemäß einer nicht erfindungsgemäßen Ausführungsform,
- Fig. 10: zeigt eine schematische Schnittansicht eines Rotorblattes gemäß einer nicht erfindungsgemäßen Ausführungsform,
- Fig. 11: zeigt eine schematische Schnittansicht eines Rotorblattes gemäß einer nicht erfindungsgemäßen Ausführungsform, und
- Fig. 12: zeigt eine schematische Schnittansicht eines Rotorblattes gemäß einer nicht erfindungsgemäßen Ausführungsform.

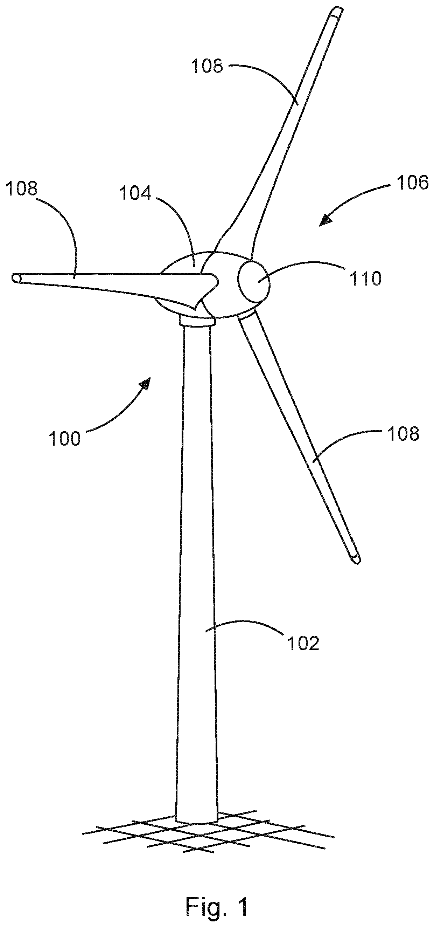

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel angeordnet und erzeugt elektrische Energie. Die Pitchwinkel der Rotorblätter 200 können durch Pitchmotoren an den Rotorblattwurzeln 210 der jeweiligen Rotorblätter 200 verändert werden.

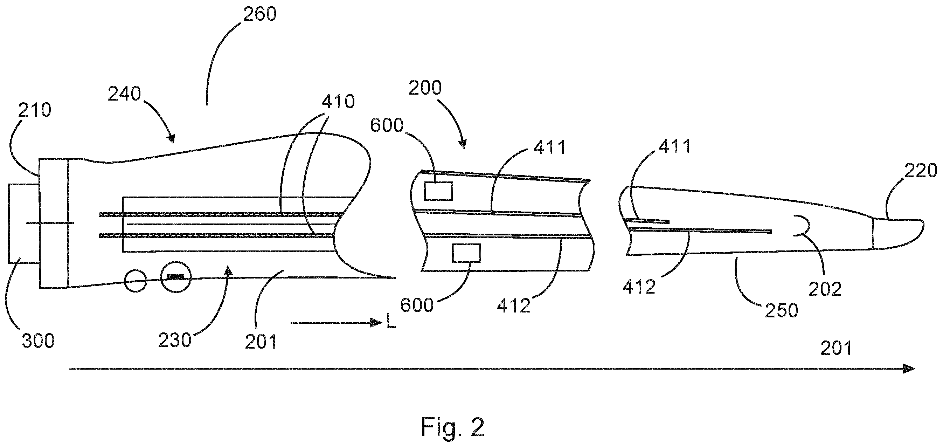

Fig. 2 zeigt eine schematische abschnittsweise Darstellung des Rotorblattes der Windenergieanlage von Fig. 1 gemäß einer erfindungsgemäßen Ausführungsform. Das Rotorblatt 200 weist eine Länge 201, eine Rotorblattwurzel 210, eine Rotorblattspitze 220, eine Vorderkante 230, eine Hinterkante 240, eine Druckseite 250 und eine Saugseite 260 auf. Innerhalb des Rotorblattes 200 ist eine Luftführung 400 vorgesehen, welche beispielsweise als ein Steg 410 ausgestaltet sein kann. Eine Rotorblattheizung 300 kann im Bereich der Rotorblattwurzel 210 vorgesehen sein. Die Rotorblattheizung 300 kann einen Lüfter und eine Heizeinheit aufweisen und warme Luft erzeugen, die in das Innere des Rotorblattes 200 geleitet werden kann.

Entlang einer Längsrichtung L des Rotorblattes 200 erstreckt sich innerhalb des Rotorblattes mindestens ein Steg 410, 411, 412, der Teil der Luftführung 400 ist bzw. der aus anderen Gründen bereits vorhanden ist und die Luftführung 400 lediglich eine sekundäre Funktion darstellt. Optional kann mehr als ein Steg vorgesehen sein.

Die durch die Rotorblattheizung 300 erwärmte Luft kann entlang des Steges 411 - als Teil der Luftführung 400 - in Richtung der Rotorblattspitze 220 geführt und dann im Bereich der Rotorblattspitze 220 umgelenkt werden. Dazu kann ein Umlenkabschnitt 202 im Bereich der Rotorblattspitze 220 vorhanden sein. Optional kann die Rotorblattspitze 220 zumindest teilweise hohl ausgestaltet sein, so dass ein Teil der erwärmten Luft durch die Rotorblattspitze 220 strömen kann, um auch die Rotorblattspitze 220 zu enteisen.

Die erwärmte Luft kann mittels der Rotorblattheizung 300 entweder im Rotorblattwurzelbereich erzeugt werden, indem die Luft mittels einer Heizeinheit erwärmt wird, oder die erwärmte Luft wird dem Rotorblatt 200 im Bereich der Rotorblattwurzel 210 zugeführt.

Mindestens ein aerodynamischer Mischer 600 kann entlang der Länge L des Rotorblattes 200 in der Luftführung vorgesehen sein. Der Mischer 600 kann dazu dienen, der Luftströmung der Rotorblattheizung einen Drall hinzuzufügen oder die Luftströmung zu verwirbeln. Dies ist vorteilhaft da es damit zu einer verbesserten Vermischung der Luftströmung kommen kann.

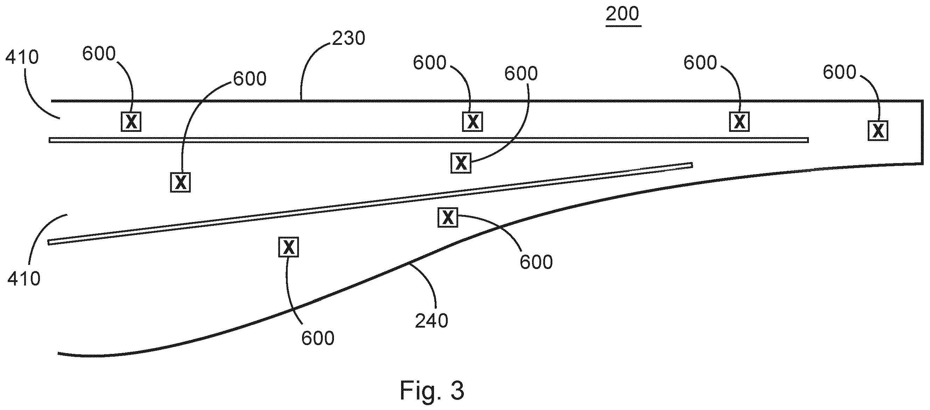

Fig. 3 zeigt eine schematische Darstellung eines Rotorblattes gemäß einer erfindungsgemäßen Ausführungsform. Das Rotorblatt 200 weist eine Rotorblattwurzel 210, eine Rotorblattspitze 220, eine Vorderkante 230 und eine Hinterkante 240 auf. Im Inneren des Rotorblattes ist mindestens ein Steg 410 vorgesehen, welcher sich von dem Bereich der Rotorblattwurzel 210 in den Bereich der Rotorblattspitze 220 erstreckt. Das Rotorblatt 200 weist mindestens einen aerodynamischen Mischer 600 auf. Ein derartiger Mischer kann entlang der Länge der Stege 410 angeordnet sein.

Der Mischer dient dazu, die Luftströmung der Rotorblattheizung zu verändern. Insbesondere kann der Mischer 600 dazu dienen, dem Luftstrom einen Drall hinzuzufügen. Alternativ oder zusätzlich dazu kann der Mischer dazu verwendet werden, die Strömungsgeschwindigkeit der Luftströmung zu beeinflussen.

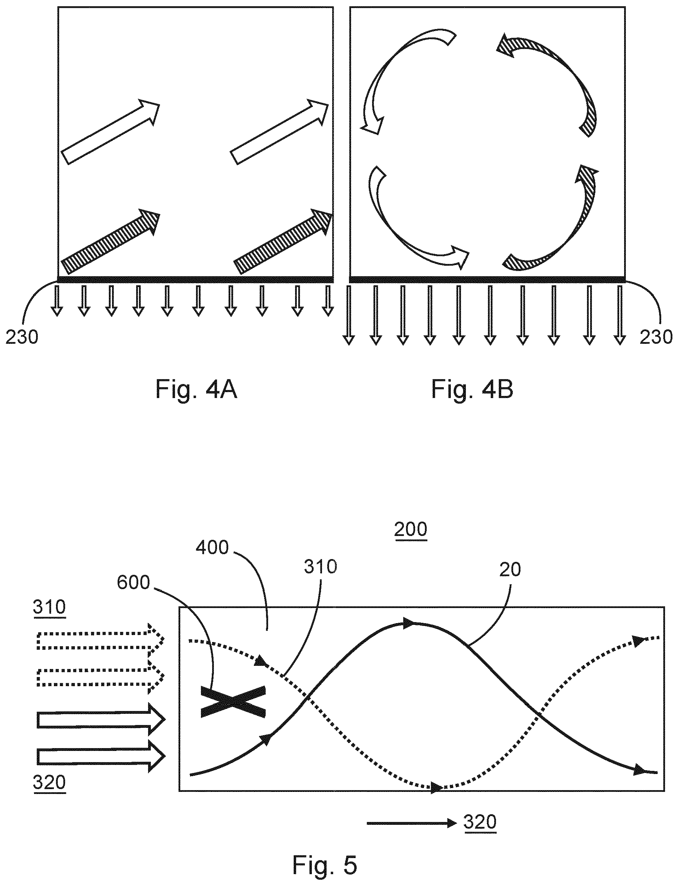

Fig. 4A zeigt eine schematische Darstellung eines Luftführungsausschnitts eines Rotorblattes gemäß dem Stand der Technik. In Fig. 4A ist insbesondere ein Ausschnitt der Vorderkante 230 dargestellt. Im Bereich der Vorderkante 230 kommt es zu einem Wärmeaustausch zwischen der erwärmten Luft, welche beispielsweise durch die Rotorblattheizung 300 zur Verfügung gestellt wird, und der kalten Oberfläche der Vorderkante 230. Dies kann dazu führen, dass unterschiedliche Luftschichten mit unterschiedlichen Temperaturen vorhanden sind. Eine erste Luftströmung (kalte Luft) kann an der Rotorblattvorderkante entstehen und eine weitere Luftströmung (warme Luft) kann in einem darüber liegenden Abschnitt vorhanden sein. Dies kann dazu führen, dass ein Austausch zwischen der warmen Luft und der kalten Luft nur bedingt erfolgt. Somit kann es dazu kommen, dass sich die in dem erwärmten Luftstrom enthaltene Wärme nicht an die Rotorblattvorderkante 230 überträgt.

Fig. 4B zeigt eine schematische Schnittansicht einer Luftführung bei einem Rotorblatt gemäß der Erfindung. Bei einem derartigen Rotorblatt ist mindestens ein Mischer im Bereich der Luftführung vorgesehen. In Fig. 4B ist dargestellt, dass es aufgrund des Mischers dazu kommt, dass die warmen und kalten Luftströmungen innerhalb der Luftführung sich vermengen, so dass warme Luft aus einer oberen Luftströmung nach unten zu der Rotorblattvorderkante 230 strömen kann und die Vorderkante erwärmen kann. Durch das Vorsehen mindestens eines Mischers in der Luftführung und durch dessen Erzeugung eines Dralls bei der Luftströmung kommt es erfindungsgemäß dazu, dass die Luftschichten innerhalb der Luftströmung der Luftführung sich vermischen und dies zu einer verbesserten Wärmeübertragung bzw. Wärmeaustausch beispielsweise an der Rotorblattvorderkante führt.

Alternativ zu dem oben Gesagten kann die Wärmeübertragung auch an einer anderen Stelle des Rotorblattes erfolgen, so dass nicht notwendigerweise nur die Rotorblattvorderkante erwärmt wird.

Fig. 5 zeigt eine schematische Darstellung eines Rotorblattes sowie einer Luftführung in dem Rotorblatt gemäß der Erfindung. Die durch die Rotorblattheizung erzeugte Luftströmung kann eine erste und zweite Luftströmung 310, 320 aufweisen. Die erste Luftströmung 310 kann beispielsweise eine Luftströmung mit einer wärmeren Temperatur und die zweite Luftströmung 320 kann eine Luftströmung mit einer kälteren Temperatur darstellen. In dem Rotorblatt kann ein aerodynamischer Mischer 600 vorgesehen sein, welcher dazu dient, eine laminare oder gleichmäßige Luftströmung (beispielsweise mit der ersten und zweiten Luftströmung 310, 320 zu vermischen, indem der Luftströmung ein Drall zugesetzt wird. Wie in Fig. 5 zu sehen, verändert sich die räumliche Anordnung der ersten und zweiten Luftströmung 310, 320 entlang einer Länge 201 des Rotorblattes 200. Dies führt somit dazu, dass die durch die Rotorblattheizung 300 zur Verfügung gestellte Wärme in der Luftströmung besser an diejenigen Stellen gelangt, bei welchen eine Wärmeübertragung (das heißt, eine Erwärmung des Rotorblattes) erfolgen soll.

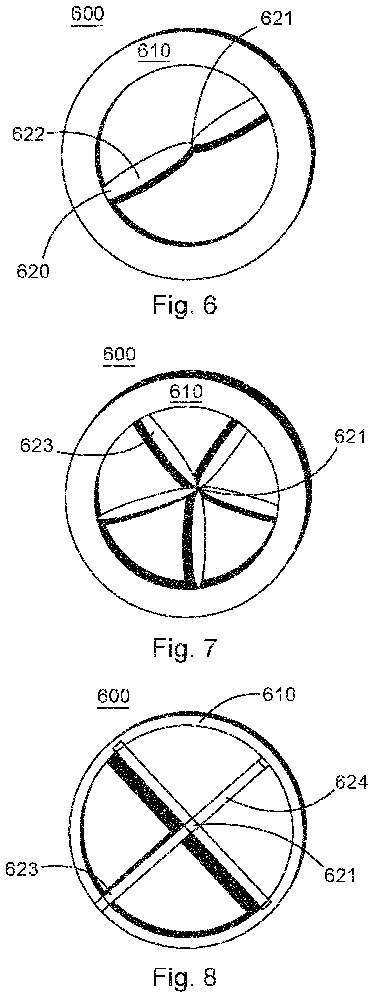

Fig. 6 zeigt eine schematische Darstellung eines Mischers gemäß einem ersten Ausführungsbeispiel der Erfindung. Der aerodynamischer Mischer 600 weist einen äußeren ringförmigen Abschnitt 610, einen Mittelpunkt 621 sowie mindestens einen Arm 622 innerhalb des Rings 610 auf. In Fig. 6 sind beispielsweise zwei Arme 622 gezeigt, welche sich im Mittelpunkt 621 treffen. Alternativ dazu können auch drei, vier fünf oder sechs Arme vorgesehen sein.

Fig. 7 zeigt eine schematische Darstellung eines Mischers gemäß einem zweiten Aspekt der vorliegenden Erfindung. Der aerodynamischer Mischer 600 weist einen ringförmigen äußeren Abschnitt 610, einen Mittelpunkt 621 sowie mehrere Arme 623 auf, welche sich zwischen dem Mittelpunkt 621 und dem Ring 610 erstrecken. In Fig. 7 sind insbesondere fünf Arme dargestellt. Der Mischer 600 kann aber auch drei, vier fünf oder sechs Arme aufweisen.

Fig. 8 zeigt eine schematische Darstellung eines Mischers gemäß einem dritten Ausführungsbeispiel der Erfindung. Der Mischer weist einen äußeren Ring 610, einen Mittelpunkt 621 sowie beispielsweise vier Arme 623, 624 auf.

In Fig. 6 können die Arme im Querschnitt ellipsenförmig ausgestaltet sein. In Fig. 7 können die Arme ebenfalls ellipsenförmig ausgestaltet sein. In Fig. 8 können die Arme gerade ausgestaltet sein.

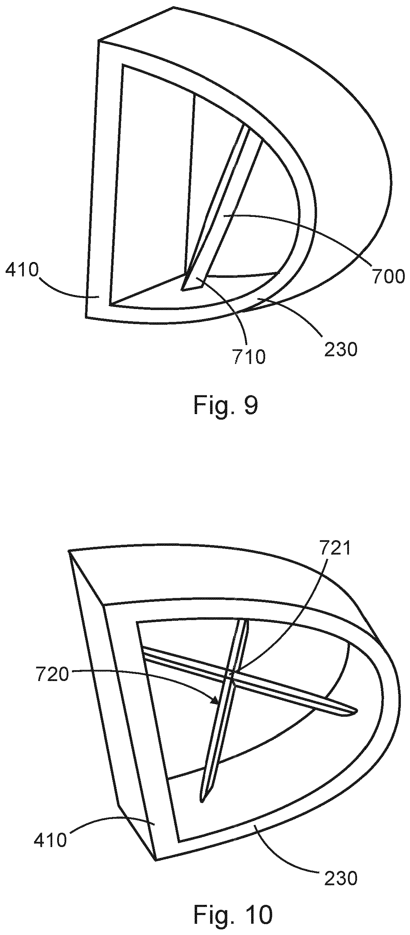

Fig. 9 zeigt eine schematische Schnittansicht eines Rotorblattes gemäß einer nicht erfindungsgemäßen Ausführungsform. In Fig. 9 ist insbesondere ein Steg 410 sowie beispielsweise eine Vorderkante 230 des Rotorblattes dargestellt. Im inneren Volumen zwischen dem Steg 410 und der Vorderkante 230 ist ein Mischer 700 vorgesehen. Der Mischer 700 kann ein Leitelement 710 aufweisen. Das Leitelement 710 kann sich zwischen zwei Abschnitten der Vorderkante 230 erstrecken. Das Leitelement 710 kann länglich ausgestaltet sein und an seinen beiden Enden Innen an einer Wandung des Rotorblattes 200 befestigt sein.

Fig. 10 zeigt eine schematische Schnittansicht eines Rotorblattes gemäß einer nicht erfindungsgemäßen Ausführungsform. In Fig. 10 ist neben dem Steg 410 eine Rotorblattvorderkante 230 dargestellt. Ferner ist ein Mischer 700 vorgesehen, welcher mehrere Arme 720 um einen Mittelpunkt 721 aufweist. Die Arme erstrecken sich zu verschiedenen Abschnitten der Rotorblattvorderkante. Das Leitelement 720 kann länglich ausgestaltet sein und seine Enden können Innen an einer Wandung des Rotorblattes 200 oder an einem Steg 410 befestigt sein.

Durch den Mischer 700 wird erreicht, dass eine beispielsweise laminare Luftströmung durch den Mischer beeinflusst wird, so dass der Luftströmung ein Drall hinzugefügt wird.

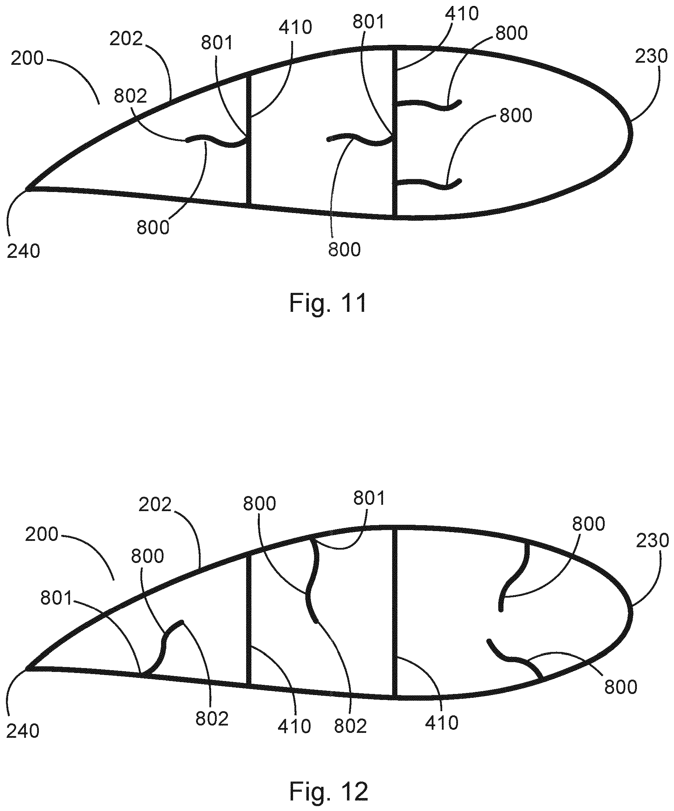

Fig. 11 zeigt eine schematische Schnittansicht eines Rotorblattes gemäß einer nicht erfindungsgemäßen Ausführungsform. Das Rotorblatt 200 weist eine Rotorblattvorderkante 230 und eine Rotorblatthinterkante 240 und Stege 410 zwischen der Saug- und der Druckseite auf. Gemäß diesem Ausführungsbeispiel ist mindestens ein Mischer 800 mittels seines ersten Endes 801 an einen der Stege 410 gekoppelt. Der Mischer 800 ist somit nur an seinem ersten Ende 801 befestigt, während das zweite Ende 802 als freies Ende ausgestaltet ist und in das Innenvolumen des Rotorblattes hineinragt.

Der Mischer kann über sein erstes Ende an einer Innenwandung des Rotorblattes oder an einem Steg in dem Rotorblatt befestigt sein.

Fig. 12 zeigt eine schematische Schnittansicht eines Rotorblattes gemäß einer nicht erfindungsgemäßen Ausführungsform. Das Rotorblatt 200 weist eine Rotorblattvorderkante 230, eine Rotorblatthinterkante 240 sowie eine Rotorblattwandung 202 auf. Die Mischer 800 sind jeweils mit ihrem ersten Ende 801 an der Innenseite der Rotorblattwandung 202 befestigt. Das zweite Ende 802 ist hierbei jeweils ein freies Ende und ragt in das innere Volumen des Rotorblattes hinein. Die Ausgestaltung des Mischers gemäß dem elften Ausführungsbeispiel ist vorteilhaft, weil es eine einfache und kostengünstige Befestigungsmöglichkeit für den Mischer ermöglicht.

Gemäß einem Aspekt der vorliegenden Erfindung kann der aerodynamische Mischer 700 an verschiedenen Stellen entlang der Länge L des Rotorblattes 200 und im Inneren des Rotorblattes 200 beispielsweise zwischen einem Steg und der Rotorblattvorderkante 230 oder zwischen einem Steg 410 und einer Rotorblatthinterkante 230 vorgesehen sein.

Gemäß einem Aspekt der vorliegenden Erfindung dienen die aerodynamischen Mischer 600, 700 dazu, eine Luftströmung innerhalb der Luftführung des Rotorblattes lokal zu beeinflussen.

Gemäß einem Aspekt der vorliegenden Erfindung bewirkt ein Aufprägen eines Dralls auf die Luftströmung in der Luftführung für die Rotorblattheizung eine signifikante Verbesserung der Blattheizungs-Performance durch einen erhöhten Wärmeaustausch an der zu erwärmenden Oberfläche (beispielsweise Rotorblattvorderkante).

Die aerodynamischen Mischer können als Statoren, Leitbleche, spiralförmige Rillen (z. B. in der Innenwandung des Rotorblattes) ausgestaltet sein. Diese können eine strömungsgünstige Formgebung durch einen vernachlässigbaren kleinen zusätzlichen Druckverlust innerhalb des Strömungskanals erlauben. Eine zusätzliche Erzeugung eines Dralls in der Luftströmung kann gemäß der Erfindung somit nicht notwendigerweise zu einer Erhöhung der Druckverluste führen.

Dies erfolgt, da Wanddruckverluste hauptsächlich von normalen Geraden der Geschwindigkeitskomponente entlang der Hauptströmungsrichtung an der Wand aufgrund der Oberflächenreibung und nicht von Gradienten der Geschwindigkeitskomponenten der Sekundärströmung (d. h. z. B., Ablenkung der Strömung durch die Leitbleche) abhängt.

Durch den Mischer wird eine Durchmischung der wandnahen sich an der Oberfläche abkühlenden Strömung mit der im Wesentlichen im Strömungskanal befindlichen Luftströmung, welche eine höhere Temperatur aufweist, besser vermischt. Dadurch steigt die Temperatur der Luftströmung, welche in Kontakt mit der Wand des Strömungskanals kommt. Somit wird die Wärmeübertragung auf die Wandung der Rotorblätter erheblich verbessert. Damit wird auch die Effizienz der Rotorblattheizung erheblich gesteigert, ohne dass die Leistung der Rotorblattheizung vergrößert werden muss.

Gemäß einem Aspekt der vorliegenden Erfindung können bereits installierte Rotorblätter mit den aerodynamischen Mischern gemäß der Erfindung nachgerüstet werden, um die Effizienz der Rotorblatterwärmung zu steigern.

Die erfindungsgemäße Lösung lässt sich insbesondere bei Rotorblättern einer Windenergieanlage anwenden, welche eine große Länge aufweisen und einen geringeren Innenquerschnitt aufweisen.

Gemäß einem Aspekt der vorliegenden Erfindung kann durch die Verwendung der erfindungsgemäßen Mischer eine Temperatur der Luftströmung an der Rotorblattschale erheblich verbessert werden. Während im Stand der Technik die Temperatur der Luftströmung an der Schalung bereits auf 50 °C sinken kann, kann mit den erfindungsgemäßen aerodynamischen Mischern die Temperatur der Luftströmung an der Innenwandung erheblich gesteigert, insbesondere auf 70 - 80 °C gesteigert werden.

Gemäß der Erfindung kann somit ein verbesserter Wärmeübergang von der erwärmten Luft auf das Material der Schalung des Rotorblattes erreicht werden, ohne dass hierbei die Druckverluste erheblich gesteigert werden.

Gemäß der Erfindung kann somit ein thermischer Austauschkühler wandnaher Strömung mit warmer wandferner Strömung verbessert werden, ohne dass dabei höhere Druckverluste resultieren. Durch das Vorsehen der aerodynamischen Mischer gemäß der Erfindung kann der Luftströmung ein Drall hinzugefügt werden, was zu einer verbesserten Wärmeübertragung führt, ohne dabei die Leistung der Rotorblattheizung zu erhöhen.

Bei zunehmender Länge des Rotorblattes kann die Wirkung des aerodynamischen Mischers nachlassen, das heißt, der Drallanteil der Strömung kann nachlassen. Dies hat zur Folge, dass die Strömung wieder zunehmend homogen wird. Zur weiteren Verbesserung der Luftströmung können somit mehrere aerodynamische Mischer in dem Rotorblatt vorgesehen werden, so dass diese aerodynamischen Mischer an mehreren Stellen vorgesehen sind, so dass sie an mehreren Stellen der Luftströmung einen Drall hinzufügen können.

Gemäß einem Aspekt der vorliegenden Erfindung kann der aerodynamische Mischer durch Vorsehen einer Mehrzahl von spiralförmigen Rillen an der Innenwandung der Rotorblattschale vorgesehen werden. Durch diese spiralförmigen Rillen kann der Luftströmung ein Drall hinzugefügt werden.

Gemäß einem Aspekt der vorliegenden Erfindung können durch die Verwendung eines aerodynamischen Mischers auch lokale Einschnürungen im Inneren des Rotorblattes aerodynamisch optimiert werden. Hierbei kann erreicht werden, dass eine Strömungsablösung im Inneren des Rotorblattes vermieden werden kann.

Der aerodynamische Mischer kann einen statischen oder passiven Mischer darstellen. Dazu weist der Mischer optional keine aktiven oder bewegliche Teile auf, um eine Vermischung der Luftströmung oder eine Verwirbelung zu erzeugen.

### Bezugszeichenliste

- 100: Windenergieanlage
- 102: Turm
- 104: Gondel
- 106: Rotor
- 110: Spinner
- 200: Rotorblätter
- 201: Länge
- 202: Wandung
- 210: Rotorblattwurzel
- 220: Rotorblattspitze
- 230: Vorderkante
- 240: Hinterkante
- 250: Druckseite
- 260: Saugseite
- 300: Rotorblattheizung
- 310: Luftströmung (warme Luft)
- 320: Luftströmung (kalte Luft)
- 400: Luftführung
- 410: Steg
- 411: Steg
- 412: Steg
- 600: Mischer
- 610: Ring
- 620: Arm
- 621: Mittelpunkt
- 622: Arm
- 623: Arm
- 624: Arm
- 700: Mischer
- 710: Leitelement
- 720: Arm
- 721: Mittelpunkt
- 800: Mischer
- 801: erstes Ende
- L: Längsrichtung

## Patentansprüche

1. Windenergieanlagen-Rotorblatt (200), mit
einer Länge (201)
einer Rotorblattwurzel (210),
einer Rotorblattspitze (220),
einer Druckseite (250),
einer Saugseite (260),
einer Vorderkante (230),
einer Hinterkante (240),
einer Luftführung (400) für erwärmte Luft zum Führen von erwärmter Luft innerhalb des Rotorblattes (200) und entlang einer Längsrichtung (L) des Rotorblattes (200) von der Rotorblattwurzel (210) in Richtung der Rotorblattspitze (220), und
mindestens einem aerodynamischen Mischer (600) in der Luftführung (400) zwischen Rotorblattwurzel (210) und Rotorblattspitze (220) zum Beeinflussen einer Luftströmung im Bereich der Luftführung (400) zwischen Rotorblattwurzel (210) und Rotorblattspitze (220), wobei
der mindestens eine aerodynamische Mischer (600) ein passiver oder ein statischer Mischer ist,
wobei der mindestens eine aerodynamische Mischer (600) dazu ausgestaltet ist, eine gleichmäßige Luftströmung in eine mit Drall behaftete Luftströmung umzuwandeln,
**dadurch gekennzeichnet, dass**
der mindestens eine aerodynamische Mischer (600) einen äußeren Ring (610), einen Mittelpunkt (621) und mehrere Arme (622, 623, 624) als Leitbleche im Inneren des Rings (610) und zwischen dem Mittelpunkt (621) und dem äußeren Ring (610) aufweist.

2. Windenergieanlagen-Rotorblatt (200) nach Anspruch 1, wobei
die Luftführung (400) mindestens einen Steg (410) aufweist, welcher zwischen der Druckseite (250) und der Saugseite (260) angeordnet ist und sich entlang der Längsrichtung (L) des Rotorblattes (200) erstreckt, wobei der mindestens eine aerodynamische Mischer (600) entlang des mindestens einen Stegs (410) angeordnet ist.

3. Windenergieanlage mit mindestens einem Windenergieanlagen-Rotorblatt (200) nach einem der Ansprüche 1 bis 2.

## Claims

1. A wind turbine rotor blade (200), with
a length (201),
a rotor blade root (210),
a rotor blade tip (220),
a pressure side (250),
a suction side (260),
a leading edge (230),
a trailing edge (240),
an air guide (400) for heated air to guide heated air inside of the rotor blade (200) and along a longitudinal direction (L) of the rotor blade (200) from the rotor blade root (210) in the direction of the rotor blade tip (220), and
at least one aerodynamic mixer (600) in the air guide (400) between the rotor blade root (210) and the rotor blade tip (220) to influence an air flow in the area of the air guide (400) between the rotor blade root (210) and the rotor blade tip (220), wherein
the at least one aerodynamic mixer (600) is a passive or a static mixer,
wherein the at least one aerodynamic mixer (600) is configured to change a laminar air flow to an air flow with swirl,
**characterized in that** the at least one aerodynamic mixer (600) has an outer ring (610), a mid point (621) and several arms (622, 623. 624) as baffle plates inside the ring (610) and between the midpoint (621) and the outer ring (610).

2. The wind turbine rotor blade (200) according to claim 1, wherein
the air guide (400) has at least one web (410), which is arranged between the pressure side (250) and the suction side (260), and extends along the longitudinal direction (L) of the rotor blade (200), wherein the at least one aerodynamic mixer (600) is arranged along the at least one web (410).

3. A wind turbine with at least one wind turbine rotor blade (200) according to one of claims 1 to 2.

## Revendications

1. Pale de rotor d'éolienne (200), avec
une longueur (201)
un pied de pale de rotor (210),
une pointe de pale de rotor (220),
un côté pression (250),
un côté aspiration (260),
un bord d'attaque (230),
un bord de fuite (240),
un conduit d'air (400) pour de l'air chauffé destiné à guider de l'air chauffé à l'intérieur de la pale de rotor (200) et le long d'une direction longitudinale (L) de la pale de rotor (200) depuis la racine de pale de rotor (210) en direction de la pointe de pale de rotor (220), et
au moins un mélangeur aérodynamique (600) dans le conduit d'air (400) entre la racine de pale de rotor (210) et la pointe de pale de rotor (220) pour influencer un flux d'air dans la zone du conduit d'air (400) entre la racine de pale de rotor (210) et la pointe de pale de rotor (220), dans laquelle
l'au moins un mélangeur aérodynamique (600) est un mélangeur passif ou statique,
dans laquelle l'au moins un mélangeur aérodynamique (600) est configuré pour convertir un flux d'air régulier en un flux d'air tourbillonnant,
**caractérisée en ce que**
l'au moins un mélangeur aérodynamique (600) présente un anneau extérieur (610), un point central (621) et plusieurs bras (622, 623, 624) comme déflecteurs à l'intérieur de l'anneau (610) et entre le point central (621) et l'anneau extérieur (610).

2. Pale de rotor d'éolienne (200) selon la revendication 1, dans laquelle
le conduit d'air (400) présente au moins une nervure (410) qui est disposée entre le côté pression (250) et le côté aspiration (260) et s'étend le long de la direction longitudinale (L) de la pale de rotor (200), dans laquelle l'au moins un mélangeur aérodynamique (600) est disposé le long de l'au moins une nervure (410).

3. Éolienne avec au moins une pale de rotor d'éolienne (200) selon l'une quelconque des revendications 1 et 2.
